# EUROPEAN PATENT APPLICATION

(11) **EP 1 617 148 A1**
(43) Date of publication of application: **18.01.2006**
(21) Application number: 05253047.4
(22) Date of filing: 18.05.2005
(51) Int. Cl.: F24C 15/32

(54) **Heating apparatus for cooking**

(30) Priority: 16.07.2004 KR 2004055530
(71) Applicant: SAMSUNG ELECTRONICS CO., LTD., Suwon-si, Gyeonggi-do (KR)
(72) Inventor: Cho, Pung Yeun, 643-1502 Shinwon Apt., Suwon-si, Gyeonggi-Do (KR); Shozo, Kobayashi, 531-1305, Shinan Apt., Suwon-Si, Gyeonggi-Do (KR); Hong, Seok Weon, 523-1906, Samsung 5th Apt., Yongin-si, Gyeonggi-Do (KR); Hwang, Yun Ic, 508-403, Joogong Apt., Suwon-Si, Gyeonggi-Do (KR); Ha, Yu Jeub, 101-604, Samchunri 2nd Apt., Suwon-Si, Gyeonggi-do (KR); Kim, Cheol Jin, Suwon-Si, Gyeonggi-do (KR)
(74) Representative: Davies, Robert Ean

(57) **Abstract**

A heating apparatus for cooking having a steam-generating device (30), which is easily cleaned and hygienically used and has improved steam-generating effects. The heating apparatus includes a main body (10) having a cooking chamber (11); a hot air chamber (18) formed in at least one of either side and or rear surfaces of the cooking chamber (11) to facilitate supply of hot air to the cooking chamber (11); and a steam-generating device (30) installed in the hot air chamber (18) operable to supplying steam to the cooking chamber (11).

## Description

The present invention relates to heating apparatus for cooking.

Generally, heating apparatuses for cooking include an electronic oven range, an electric oven range, and a gas oven range, for example. The electronic oven range, e.g., a microwave oven, supplies high-frequency waves generated from a magnetron to the inside of a cooking chamber, thereby cooking foods placed in the cooking chamber using heat generated from the foods themselves. The electric oven range or the gas oven range transmits heat, generated from the operation of an electric heater or the combustion of a gas, to the inside of a cooking chamber, thereby cooking foods in the cooking chamber. Since moisture of the foods is evaporated during cooking, the above heating apparatuses for cooking are disadvantageous in that the foods are easily dried. To address this disadvantage, a steam-generating device for preventing foods from being dried and improving cooking effects can be installed in the heating apparatuses for cooking.

EP Patent No. 0277337 discloses a heating apparatus for cooking comprising a steam-generating device having a container shape installed on the bottom of a cooking chamber, and a water tank of a drawer-type installed above the cooking chamber for supplying water to the steam-generating device.

Japanese Laid-open Patent No. 2004-20005 discloses a heating apparatus using high-frequency waves comprising an evaporation tray installed on the bottom of a cooking chamber, a heater for heating water in the evaporation tray, and a water tank installed at a side of the cooking chamber for supplying water to the evaporation tray.

The above heating apparatuses supply water from the water tank to the steam-generating device or the evaporation tray, and heat the water supplied to the steam-generating device or the evaporation tray, using the heater to generate steam. Steam is then supplied to the cooking chamber.

Since the steam-generating devices of the above heating apparatuses for cooking are installed below the cooking chambers, debris or oil falling from foods placed in the cooking chambers can be introduced into the steam-generating devices, thereby contaminating water in the steam-generating devices and causing hygiene problems. Further, it is difficult to separate this type of steam-generating device, from the main body of a heating apparatus for repair.

It is an aim of preferred embodiments of the present invention to address a disadvantage of the prior art, whether identified herein, or otherwise.

According to a first aspect of the present invention, there is provided heating apparatus for cooking including: a main body having a cooking chamber; a hot air chamber to facilitate supply of hot air to the cooking chamber; and a steam-generating device in the hot air chamber operable to supply steam to the cooking chamber.

The hot air chamber may include a heater and a fan, and the steam-generating device may be heated indirectly by the heater and hot air in the hot air chamber. Since the steam-generating device of the heating apparatus for cooking is not thermally isolated from other heat sources efficiency in generating steam is increased.

The heating apparatus may also include a water supply device operable to supply water to the steam-generating device.

The water supply device may include a water tank above the cooking chamber; a water supply pump operable to supply water from the water tank to the steam-generating device; a plurality of water supply pipes connecting the water tank and the water supply pump, and connecting the water supply pump to the steam-generating device.

The steam-generating device may include a water supply pipe arranged to receive water from the water supply device; a heating tank for containing water; a steam-generating heater operable to heat water contained in the heating tank; and exhaust pipes arranged to exhaust generated steam to the cooking chamber. By providing a steam-generating device which is heated by its peripheral heat as well as its heater, steam-generating effects are increased.

The hot air chamber may include a first heater and a second heater, which are separated from each other, and the steam-generating device may be interposed between the first heater and the second heater.

The hot air chamber may further include a first fan operable to blow air heated by the first heater and a second fan operable to blow air heated by the second heater.

The heating apparatus may also include a hot air chamber cover, provided with a plurality of air vents formed therethrough, detachably attached to the inside of the cooking chamber such that the hot air chamber cover covers a surface of the hot air chamber, preferably a front surface.

The hot air chamber may be located in at least one of a rear surface and or side surfaces of the cooking chamber.

According to second aspect of the present invention, there is provided a heating apparatus for cooking including: a main body having a cooking chamber; a hot air chamber formed in at least one of side and rear surfaces of the cooking chamber to facilitate supply of hot air to the cooking chamber; and a steam-generating device detachably installed in the hot air chamber operable to supply steam to the cooking chamber.

The steam-generating device may include a heating tank having a heating container having an opened upper end surface, and a cover member closing the opened upper end surface of the heating container, and the cover member of the heating tank may be fixed to the inside of the hot air chamber, and the heating container of the heating tank may be detachably attached to the cover member. Thus, the steam-generating device is easily and hygienically cleanable.

The cover member may be provided with a steam-generating heater operable to heat water contained in the heating tank, a water supply pipe arranged to supply water to the inside of the heating tank, and exhaust guide pipes arranged to guide exhaust of steam.

A packing member may be placed at an interface between the heating container and the cover member.

A water level sensor operable to sense a level of the water contained in the heating container may be installed in the cover member.

According to a third aspect of the present invention, there is provided a steam supply device for a heating apparatus having a cooking chamber and a hot air chamber to facilitate supply of hot air to the cooking chamber, including: water tank installed above the cooking chamber; a heating tank in the hot air chamber; a water supply pump operable to supply water in the water tank to the heating tank; and a steam-generating heater in the heating tank operable to convert water contained in the heating tank into steam.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a perspective view of a heating apparatus for cooking in accordance with a first embodiment of the present invention;
FIG. 2 is a longitudinal-sectional view of the heating apparatus for cooking of FIG 1;
FIG. 3 is an enlarged view of portion III of FIG. 2;
FIG. 4 is an exploded perspective view of a steam-generating device of the heating apparatus for cooking of FIG 1; and
FIG. 5 is a longitudinal-sectional view of a heating apparatus for cooking in accordance with a second embodiment of the present invention.

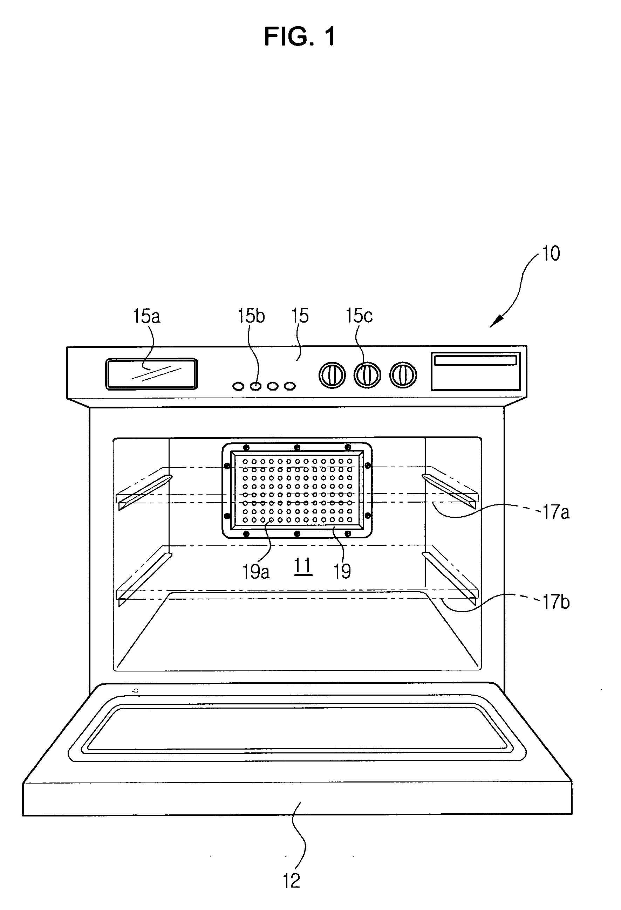

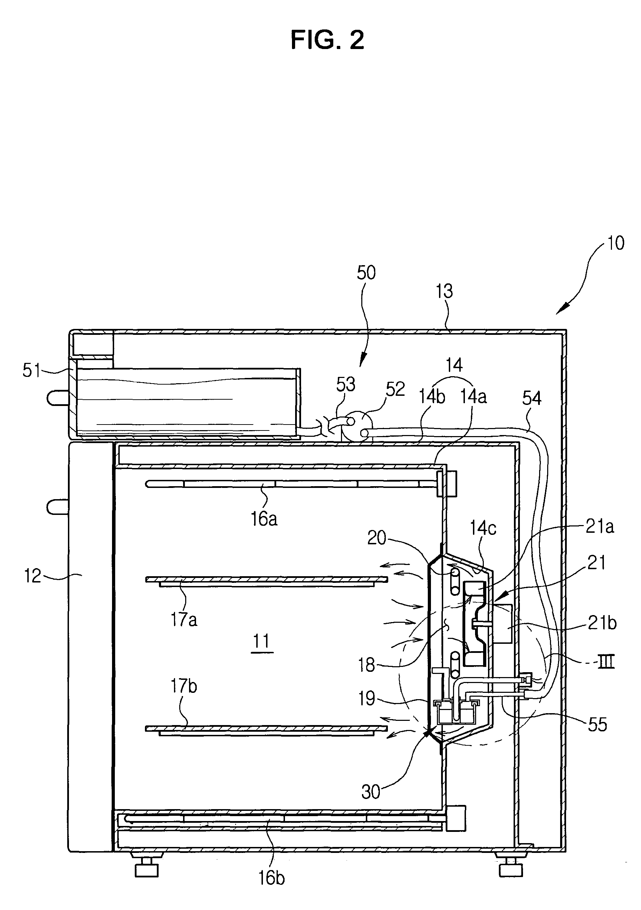

FIGS. 1 and 2 show, a heating apparatus for cooking in accordance with a first embodiment of the present invention. The heating apparatus for cooking includes a main body 10 having a cooking chamber 11 installed therein, and a door 12 vertically rotatably installed (i.e. rotatably installed about a horizontal axis) on the front surface of the main body 10 for closing the opened front surface of the cooking chamber 11. The heating apparatus for cooking also includes a hot air chamber 18 installed at the rear portion of the inside of the cooking chamber 11, a heater 20 installed in the hot air chamber 18, a blowing device 21 for circulating air in the cooking chamber 11 to the hot air chamber 18, a steam-generating device 30 installed in the hot air chamber 18 for supplying steam to the cooking chamber 11, and a water supply device 50 installed at the upper portion of the cooking chamber 11 for supplying water to the steam-generating device 30.

The main body 10 includes an outer case 13 which may be made of plate iron, and an inner case 14 installed in the outer case 13 such that the outer surface of the inner case 14 is separated from the inner surface of the outer case 13 for forming the cooking chamber 11. The inner case 14 has a first case 14a forming the inner surface of the inner case 14 and a second case 14b forming the outer surface of the inner case 14, which are separated from each other. A space is formed between the first case 14a and the second case 14b, thereby thermally insulating the cooking chamber 11 from the outside. As shown in FIG. 1, an operating unit 15 including a display 15a for displaying the operational state of the heating apparatus for cooking, various operating buttons 15b, and manipulation switches 15c is installed at the upper part of the door 12 on the front surface of the main body 10.

Shelves 17a and 17b for placing foods thereon are respectively installed at upper and lower portions of the inside of the cooking chamber 11. An upper heater 16a and a lower heater 16b for heating the foods placed on the shelves 17a and 17b are respectively installed at the upper and lower portions of the inside of the cooking chamber 11. Here, the upper heater 16a is installed at the upper portion of the inside of the cooking chamber 11, and the lower heater 16b is installed on the outer lower surface of the cooking chamber 11. That is, the lower heater 16b contacts the outer surface of the bottom of the first case 14a. The above structure protects the lower heater 16b from foreign substances falling from the foods placed in the cooking chamber 11, and transmits heat of the lower heater 16b to the inside of the cooking chamber 11 through the bottom of the first case 14a.

As shown in FIG. 2, the hot air chamber 18 installed at the rear portion of the inside of the cooking chamber 11 is formed by a depression 14c in the rear surface of the first case 14a of a designated depth. A hot air chamber cover 19, provided with a plurality of air vents 19a (in FIG. 1) formed therethrough, is detachably installed on the rear surface of the inside of the cooking chamber 11 such that the hot air chamber cover 19 covers the front surface of the hot air chamber 18. Although the hot air chamber 18 of this embodiment of the present invention is formed at the rear portion of the inside of the cooking chamber 11, the hot air chamber 18 may be formed at both side surfaces of the cooking chamber 11.

The blowing device 21, for circulating air to the hot air chamber 18, includes a centrifugal air blast fan 21a installed in the hot air chamber 18, and a driving motor 21 b installed at the outer surface of the rear portion of the hot air chamber 18 for driving the air blast fan 21 a. The heater 20 is installed adjacent to the outer periphery of the air blast fan 21a in the hot air chamber 18. When the air blast fan 21a is operated when the heater 20 is operated, the air in the cooking chamber 11 is drawn in to the air blast fan 21a, and is exhausted to the outside of the air blast fan 21 a in the radial direction of the air blast fan 21 a. Then, the exhausted air is heated by the heater 20, and is supplied to the inside of the cooking chamber 11. The above circulation of the hot air improves cooking of the foods placed in the cooking chamber 11.

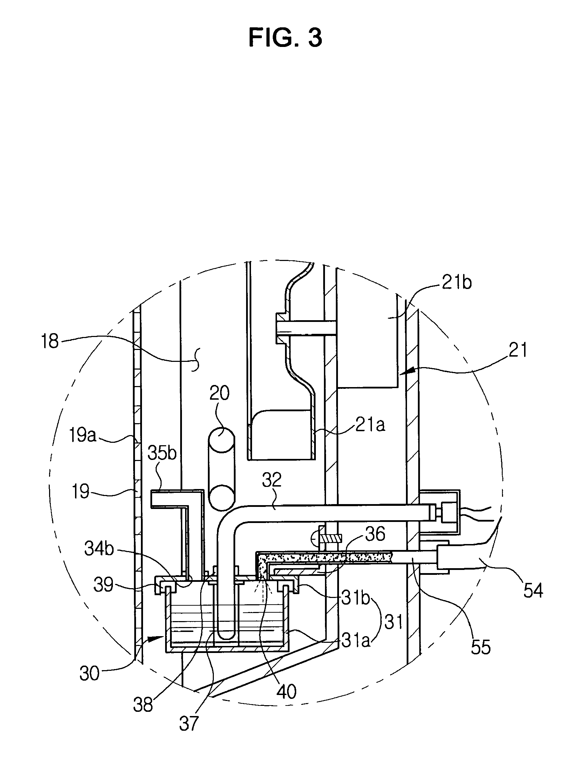

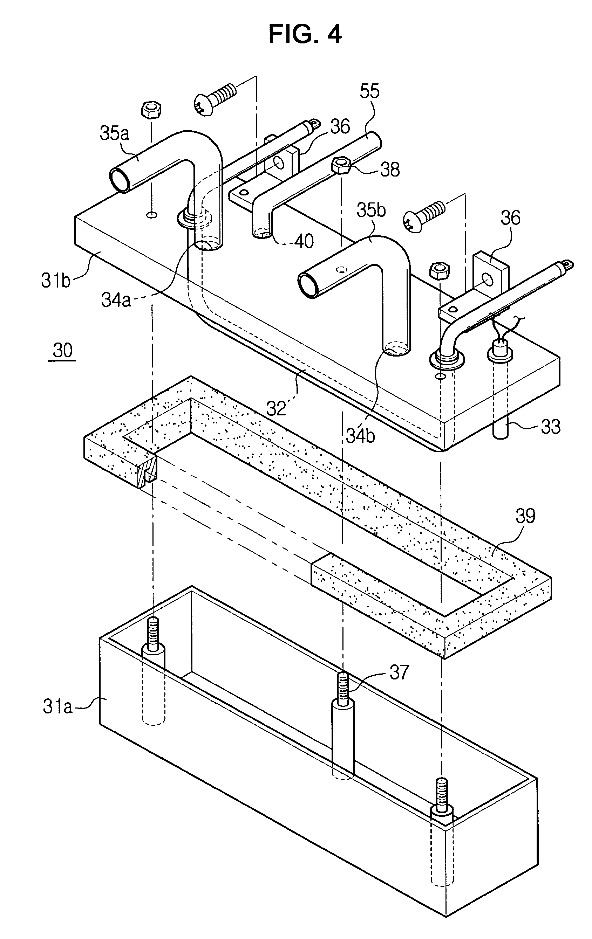

As shown in FIGS. 3 and 4, the steam-generating device in the hot air chamber 18 includes a hermetic heating tank 31 containing a designated quantity of water, a steam-generating heater 32 for heating the water contained in the heating tank 31, and a water level sensor 33 for sensing the level of the water contained in the heating tank 31.

The heating tank 31 includes a heating container 31 a having a rectangular hexahedral structure provided with an open upper surface, and a cover member 31 b for closing the opened upper surface of the heating container 31 a. The cover member 31 b is provided with steam exhaust holes 34a and 34b respectively formed at both sides thereof. Here, the cover member 31 b is fixed to the inner rear surface of the hot air chamber 18 through fixing members 36 installed at upper portions of the rear surfaces of both sides thereof, and the heating container 31 a is detachably attached to the lower portion of the cover member 31 b. For this reason, a plurality of fixing bolts 37 which extendupward are fixed to the inside of the heating container 31a. After upper ends of the fixing bolts 37 pass through the cover member 31 b, fixing nuts 38 are respectively coupled with the corresponding upper ends of the fixing bolts 37, thereby fixing the fixing bolts 37. A packing member 39 for maintaining an airtight state is interposed between the upper end of the heating container 31 a and the cover member 31 b.

Both ends of the steam-generating heater 32 are fixed to the cover member 31 b such that the main portion of the steam-generating heater 32 can be submerged in water in the heating container 31a, and an end of the water level sensor 33 is fixed to the cover member 31b such that the main portion of the water level sensor 33 can be submerged in the water in the heating container 31a. A water supply hole 40 for supplying water to the heating container 31 a therethrough is formed through the cover member 31 b, and a water supply pipe 55 of the water supply device 50, which will be described later, is connected to the water supply hole 40. Exhaust guide pipes 35a and 35b having a designated length for guiding exhaust steam are respectively connected to steam exhaust holes 34a and 34b formed at both sides of the cover member 31 b.

The steam-generating device 30 generates steam by heating water supplied to the heating tank 31 a using the steam-generating heater 32, and supplies the steam to the cooking chamber 11 through the exhaust guide pipes 35a and 35b. Since the steam-generating device 30 is installed in the hot air chamber 18 at the rear of the cooking chamber 11, it is possible to prevent the steam-generating device 30 from being contaminated by remnants or oil falling from the foods. When a user wants to clean the steam-generating device 30, the heating container 31a is separated from the cover member 31 b simply by loosening the fixing nuts 38 installed at the upper portion of the cover member 31 b, and then the inside of the heating container 31 a and the outer surface of the steam-generating heater 32 can be conveniently cleaned.

The above steam-generating device 30 heats the outer surface of the heating tank 31 using the heater 20 in the hot air chamber 18, thereby increasing efficiency in generating the steam, and uniformly supplies the steam exhausted through the exhaust guide pipes 35a and 35b to the cooking chamber 11 using the air circulating into the hot air chamber 18, thereby improving cooking.

As shown in FIGS. 1 and 2, the water supply device 50 placed in the upper portion of the cooking chamber 11 includes a water tank 51 which may be of a drawer-type installed above the cooking chamber 11 so that the water tank 51 can be drawn forward, a water supply pump 52 for supplying water from the water tank 51 to the steam-generating device 30, and a plurality of water supply pipes 53, 54 and 55 for connecting the water tank 51 and the water supply tank 52 and connecting the water supply tank 52 and the heating tank 31. Here, the water supply pipe 53 interposed between the water tank 51 and the water supply pump 52 has a length sufficient to allow the water tank 51 to be drawn forward.

In the above configuration of the water supply device 50, a user can draw the water tank 51 forward from the front surface of the main body 10 and fill the water tank 51 with water, and the water contained in the water tank 51 can be supplied to the heating tank 31 by the operation of the water supply pump 52. Here, the operation of the water supply pump 52 is controlled by the water level sensor 33 installed in the heating tank 31 of the steam-generating device 30 for adjusting the level of the water in the heating tank 31.

Hereinafter, the overall operation of the heating apparatus for cooking and the cleaning method of the steam-generating device of the heating apparatus for cooking will be described in detail.

When foods are placed on either of the shelves 17a and 17b in the cooking chamber 11 and the heating apparatus for cooking is operated, the upper and lower heaters 16a and 16b placed at the upper and lower portions of the cooking chamber 11 and the heater 20 placed in the hot air chamber 18 are operated and the air blast fan 21a in the hot air chamber 18 is operated. The foods placed in the cooking chamber 11 are heated by heat generated from the upper and lower heaters 16a and 16b and hot air circulated through the hot air chamber 18 by the operation of the air blast fan 21a.

When a user wants to cook foods in the cooking chamber 11 using steam supplied to the cooking chamber 11, the user first fills the water tank 51 installed above the cooking chamber 11 with water and then operates the steam-generating device 30. Then, water is supplied from the water tank 51 to the heating tank 31 in the hot air chamber 18 by the operation of the water supply pump 52. Here, a controller (not shown) controls the operation of the water supply pump 52 based on the sensing operation of the water level sensor 33 installed in the heating tank 31, thereby achieving the above-described water supply. When the level of the water in the heating tank 31 reaches a proper level, the controller supplies power to the steam-generating heater 32 so that the water in the heating tank 31 is heated by the steam-generating heater 32 and is changed to steam. The steam is supplied to the cooking chamber 11 through the exhaust guide pipes 35a and 35b. The steam exhausted through the exhaust guide pipes 35a and 35b is uniformly supplied to the inside of the cooking chamber 11 by the air circulating into the hot air chamber 18, thereby preventing the foods from being dried and improving cooking.

Here, water in the heating tank 31 of the steam-generating device 30 of the present embodiment is heated by the heater 20 in the hot air chamber 18 as well as the steam-generating heater 32. Accordingly, since the water in the heating tank 31 is rapidly heated and efficiency in generating steam is improved, the steam-generating device 30 employs the steam-generating heater 32 having a low capacity yet can still generate a sufficient quantity of steam. The steam-generating device 30, which employs the steam-generating heater 32 having a low capacity, has low production costs.

When a user wants to clean the inside of the heating tank 31 and the steam-generating heater 32, the user first separates the hot air chamber cover 19 from the rear portion of the cooking chamber 11 and then separates the fixing nuts 38 from the upper surface of the heating tank 31. Thereby, the heating container 31a of the heating tank 31 is easily separated from the cover member 31 b, thus allowing the user to easily clean the inside of the heating tank 31. Further, the separation of the heating container 31a from the cover member 31 b exposes the steam-generating heater 32 fixed to the cover member 31b to the outside, thus allowing the user to easily remove foreign substances from the surface of the steam-generating heater 32.

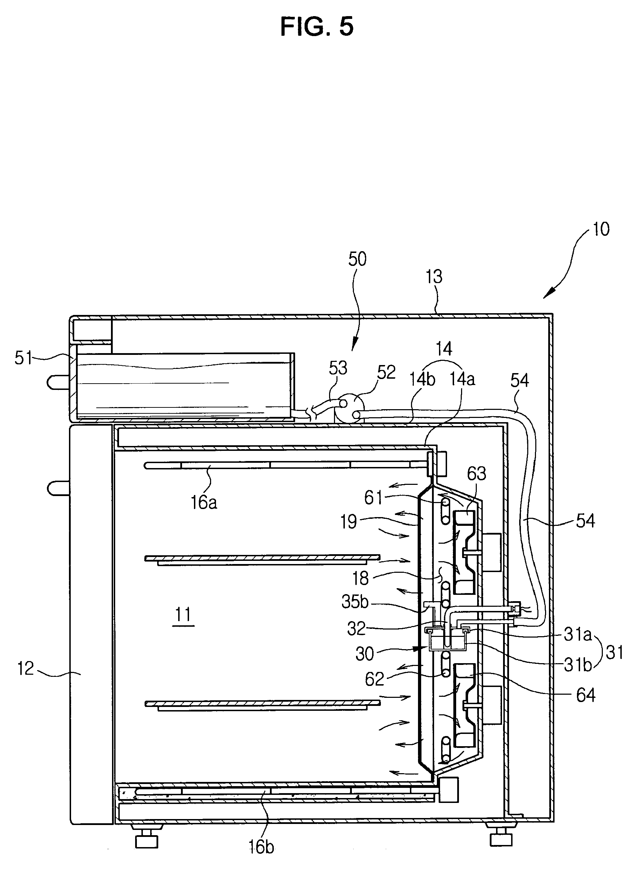

FIG. 5 illustrates a heating apparatus for cooking in accordance with a second embodiment of the present invention. The heating apparatus for cooking of the second embodiment includes first and second heaters 61 and 62 respectively installed at upper and lower portions of the hot air chamber 18, and first and second air blast fans 63 and 64 respectively installed at the upper and lower portions of the hot air chamber 18. The steam-generating device 30, which is also employed by the heating apparatus of the first embodiment, is interposed between the first heater 61 and the second heater 62. This configuration of the heating apparatus of the second embodiment causes the heating tank 31 of the steam-generating device 30 to be heated by the first and second heaters 61 and 62 as well as the steam-generating heater 32, thereby having improved steam-generating effects compared to the heating apparatus of the first embodiment. The heating apparatus for cooking of the second embodiment, which includes the small-sized heating tank 31 and steam-generating heater 32, generates a sufficient quantity of steam. Other parts of the heating apparatus for cooking of the second embodiment are substantially the same as those of the heating apparatus for cooking of the first embodiment, and detailed descriptions thereof is thus omitted.

The above-described embodiments of the present invention provide a heating apparatus for cooking having a steam-generating device, which is installed in a hot air chamber in the rear of a cooking chamber, so as to prevent the steam-generating device from being contaminated by debris or oil falling from foods placed in the cooking chamber, thereby operating hygienically.

Since a heating tank installed in the hot air chamber of the heating apparatus for cooking of the present invention is easily disassembled, the heating tank and the steam-generating heater are easily cleaned.

Since the steam-generating devices of the heating apparatus for cooking of the above-described embodiments of the present invention are installed in the hot air chamber, water contained in the heating tanks is heated by heater(s) in the hot air improved. Accordingly, the heating apparatuses for cooking employ the steam-generating heater having a low capacity, and are still able to generate sufficient steam.

The steam, which is exhausted through exhaust guide pipes of the steam-generating device, is uniformly supplied to the cooking chamber by air circulated into the hot air chamber, giving heating apparatuses for cooking of the above-described embodiments of the present invention improved cooking effects.

Although embodiments of the present invention have been shown and described, it would be appreciated by those skilled in the art that changes may be made in these embodiments without departing from the principles of the invention, the scope of which is defined in the claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A heating apparatus for cooking comprising:
a main body (10) having a cooking chamber (11);
a hot air chamber (18) to facilitate supply of hot air to the cooking chamber (11); and
a steam-generating device (30) in the hot air chamber (18), operable to supply steam to the cooking chamber (11).

2. The heating apparatus according to claim 1, wherein the hot air chamber (18) includes a heater (20) and a fan (21), and
wherein the steam-generating device is heated indirectly by the heater (20) and hot air in the hot air chamber.

3. The heating apparatus according to claim 1 or 2, further comprising a water supply (50), operable to device supply water to the steam-generating device (30).

4. The heating apparatus according to claim 3, wherein the water supply device (50) includes:
a water tank (51) above the cooking chamber (11);
a water supply pump (52), operable to supply water from the water tank (51) to the steam-generating device (30); and
a plurality of water supply pipes (53, 54), connecting the water tank (51) to the water supply pump (52), and connecting the water supply pump (52) to the steam-generating device (30).

5. The heating apparatus according to claim 3 or 4, wherein the steam-generating device (30) includes:
a water supply pipe, arranged to receive water from the water supply device (50);
a heating tank (31) for containing water;
a steam-generating heater (32), operable to heat the water contained in the heating tank (21); and
exhaust pipes (35) arranged to exhaust generated steam to the cooking chamber (11).

6. The heating apparatus according to any preceding claim, wherein the hot air chamber (18) includes a first heater (61) and a second heater (62) separated from the first heater (61), and the steam-generating device (30) is between the first heater (61) and the second heater (62).

7. The heating apparatus according to claim 6, wherein the hot air chamber 18) includes a first fan (63) operable to blow air heated by the first heater (61) and a second fan (64) operable to blow air heated by the second heater (62).

8. The heating apparatus according any preceding to claim, further comprising a hot air chamber cover (19) having a plurality of air vents (19a) formed therethrough and detachably attached to the inside of the cooking chamber (11) such that the hot air chamber cover (19) covers a surface of the hot air chamber (18).

9. The heating apparatus of any preceding claim, wherein the hot air chamber (18) is located in at least one of a rear surface and/or side surfaces of the cooking chamber (11).

10. A heating apparatus for cooking comprising:
a main body (10) having a cooking chamber (11);
a hot air chamber (18) formed in at least one of rear and side surfaces of the cooking chamber (11) to facilitate supply of hot air to the cooking chamber(11); and
a steam-generating device (30) detachably installed in the hot air chamber (18) operable to supply steam to the cooking chamber (11).

11. The heating apparatus according to claim 10, wherein the steam-generating device (30) includes a heating tank (31) having a heating container (31 a) having an open upper end surface, and a cover member (31 b) closing the open upper end surface, and
wherein the cover member (31b) of the heating tank (31) is fixed to an inside of the hot air chamber (18), and the heating container (31 a) of the heating tank (31) is detachably attached to the cover member (31b).

12. The heating apparatus according to claim 11, wherein the cover member (31 b) has a steam-generating heater (32) operable to heat water contained in the heating tank (31), a water supply pipe (55) arranged to supply water to the inside of the heating tank (31), and exhaust pipes (34) arranged to exhaust generated steam.

13. The heating apparatus according to claim 11 or 12, wherein a packing member (39) is placed at an interface between the heating container (31 a) and the cover member (31 b).

14. The heating apparatus according to claim 11, 12 or 13, wherein a water level sensor (33) operable to sense a level of the water contained in the heating container (31) is installed in the cover member (31 b).

15. The heating apparatus according to any one of claims 10-14, further comprising a hot air chamber (19) cover having a plurality of air vents (19a) formed therethrough and detachably attached to the inside of the cooking chamber such that the hot air chamber cover (19) covers the front surface of the hot air chamber (11).

16. The heating apparatus according to claim 12 or of any one of claims 13-15 as dependent on claim 12, wherein ends of the steam-generating heater (32) are fixed to the cover member (31 b) such that a portion of the steam-generating heater (32) can in use be covered by water contained in the heating container (31 a).

17. The heating apparatus according to claim 12 or of any one of claims 13-16 as dependent on claim 12, wherein the exhaust pipes (34) are positioned so as to uniformly supply exhausted steam to the cooking chamber (11) using air circulating in the hot air chamber (18).

18. The heating apparatus according to claim 9, further comprising:
a water supply device (50) including a water tank (51) and a water supply pump (52) operable to supply water from the water tank (51) to the steam-generating device (30).

19. The heating apparatus according to claim 18, wherein the water tank is of a drawer-type and is drawable forward.

20. The heating apparatus according to claim 19, wherein a water supply pipe (53) connects the water tank (51) and the water supply pump (52), the water supply pipe (53) being of sufficient length allow the water tank (51) to be drawn forward.

21. The heating apparatus according to claim 19, wherein the water tank (51) is fillable when drawn forward.

22. The heating apparatus according to claim 18, 19, 20 or 21 wherein the water tank (51) is disposed above the cooking chamber (11).

23. The heating apparatus according to any one of claims 18-22, wherein operation of the water supply pump (52) is controlled according to a sensed water level sensed by a water level sensor (33) in the heating tank (31).
